# EUROPÄISCHE PATENTSCHRIFT

(11) **EP 0 782 686 B1**
(45) Veröffentlichungstag und Bekanntmachung des Hinweises auf die Patenterteilung: **03.03.1999**
(21) Anmeldenummer: 96914050.8
(22) Anmeldetag: 03.05.1996
(51) Int. Cl.: F26B 5/06, B65G 47/82, B65G 47/08

(54) **BESCHICKUNGSANLAGEN FÜR BEHANDLUNGSANLAGEN VON IN GEFÄSSEN ODER BEHÄLTNISSEN BEFINDLICHEN STOFFEN**
CHARGING INSTALLATIONS FOR TREATMENT PLANTS FOR MATERIALS IN CONTAINERS
INSTALLATIONS DE CHARGEMENT POUR UNITES DE TRAITEMENT DE SUBSTANCES SE TROUVANT DANS DES RESERVOIRS OU DES RECIPIENTS

(30) Priorität: 06.05.1995 DE 29507589 U
(43) Veröffentlichungstag der Anmeldung: 09.07.1997
(73) Patentinhaber: Kelly, Douglas, 69120 Heidelberg (DE); Seltmann, Bernd, 69121 Heidelberg (DE); Witte, Nikolai, 63454 Hanau (DE)
(72) Erfinder: Kelly, Douglas, 69120 Heidelberg (DE); Seltmann, Bernd, 69121 Heidelberg (DE); Witte, Nikolai, 63454 Hanau (DE)
(74) Vertreter: Schmid, Rudolf, Dipl.-Ing., Patentanwalt
(86) Internationale Anmeldenummer: DE9600783
(87) Internationale Veröffentlichungsnummer: WO9635090

(56) Entgegenhaltungen:
- EP-A- 0 391 208
- DE-B- 1 269 937
- US-A- 3 040 867
- US-A- 4 067 434

## Beschreibung

Die Erfindung betrifft eine Beschickungsanlage für Behandlungsanlagen von in Gefäßen oder Behältnissen befindlichen Stoffen nach dem Oberbegriff des Hauptanspruchs.

In der pharmazeutischen Industrie ist es üblich, bestimmte Produkte höchster Sterilität und Partikelfreiheit zu unterwerfen. Zu diesem Gesamtkomplex der Sterilisation gehört nicht nur die entsprechend sorgfältige Behandlung des Produktes sondern auch deren Handhabungsobjekte. Unter Handhabungsobjekten werden hierbei Förderanlagen als auch Behandlungsstationen verstanden. Da Maschinenanlagenteile zum Zwecke ihres zuverlässigen Betriebes mit Schmierstoffen oder ähnlichen Mitteln gepflegt werden müssen, ist der Einsatz von Maschinen bei den geforderten Sterilisationsgraden und Keimfreiheiten oftmals nicht vertretbar. Daher wurden solche beschriebenen Produkte bisher manuell gehandhabt. Je nach vorliegendem Produkt muß nach jeder Charge oder jedem Arbeitstag die Anlage einer Sterilisation unterworfen werden. Dies resultiert aus pharmazeutischen Vorschriften, auf die der Betreiber als solcher keinen Einfluß hat. Nicht absehbare Störfälle im Handhabungsablauf können zu einem erheblichen Schaden, bis hin zur Chargenvernichtung führen.
Insbesondere bei der Beschickung von Gefriertrockensystemen aber auch von anderen Behandlunsanlagen, beispielsweise in der pharmazeutischen Industrie, ist die manuelle Beschickung derzeit die sinnvollste, jedoch nicht absolut sichere Methode, da hier stets individuelle, menschliche Fehler zu vorgenannten Störfällen führen können.

Die DE-B 1 269 937 offenbart eine Vorrichtung zum Einbringen von Gegenständen auf einen Traguntersatz, auf dem die Gegenstände in Reihen angeordnet werden, mit einem ersten Schuborgan, um Reihen von Gegenständen von einem Förderer über eine feststehende Platte zu schieben und die Gegenstände reihenweise an auf dem Traguntersatz vorgesehene Plätze zu bringen und mit einem zweiten Schuborgan, das im rechten Winkel zur Bahn des ersten Schuborgans beweglich ist. Gemäß diesem Stand der Technik sind speziell ausgebildete Traguntersätze vorgesehen, auf denen die Gegenstände vorbestimmte Positionen einnehmen sollen, so daß bereits bei der Ausrüstung der Vorrichtung gemäß diesem Stand der Technik ein erheblicher Aufwand betrieben werden muß. Beim Stand der Technik ist das Füllvolumen nicht einstellbar und unterschiedliche Gefäßgrößen können nicht den jeweiligen Anforderungen entsprechend optimal in der Beladezone gepackt werden.

Der vorliegenden Erfindung liegt daher die Aufgabe zugrunde, Mittel bereitzustellen, die all diese Nachteile beheben und einen störungsfreien Ablauf sicherstellen, wobei der Automatisierungsgrad nahezu zu vervollständigen ist.
Erfindungsgemäß wird diese Aufgabe durch die Merkmale des vorgeschlagenen Hauptanspruchs gelöst.

Besonders bevorzugte Ausführungsformen der Erfindung sind in den Unteransprüchen gekennzeichnet.

Gemäß der vorliegenden Erfindung wird nun eine Beschickungsanlage geschaffen, die zum Einsatz für Behandlungsanlagen von in Gefäßen oder Behältnissen befindlichen Stoffen, beispielsweise für Gefriertrocknersysteme von steril zu behandelnden Produkten in der pharmazeutischen Industrie geeignet ist. Erstmals wird somit eine solche Beschickung voll automatisiert, so daß die Handhabungssicherheit und somit die Gewähr des störfreien Verfahrensablauf gesichert ist. Dies wird durch mindestens zwei, durch lineare Bewegungseinheiten, beispielsweise gekapselte Hydraulikkolben, aktivierbare Arbeitsschieber erreicht, die eine Beladezone begrenzen, in die der, in einem Gefäß befindliche Stoff von einer Transportanlage,
beispielsweise reihenweise oder in einem Versatz eingeführt wird und welche das Gefäß so kontaktieren, daß eine senkrechte und kippsichere Ausrichtung dieser erreicht wird. Die in der Pharmazie eingesetzten Gefäße sind Produktflaschen und werden im Fachchargon "Vials"genannt. Der Abstand der Arbeitsschieber die sich quer zum Anförderstrom bewegen entspricht beim ersten Takt dem Durchmesser dieser Vials und verändert sich entsprechend der Anzahl der parallelen, gegebenenfalls versetzten Reihen. Die Arbeitsschieber bilden einen Vorkommnissionierraum, der mit den zu behandelnden in Gefäßen befindlichen Stoffen füllbar ist und nach Erreichung eines vorgebbaren Füllvolumens, unter Beibehaltung der durch die Schieber erhaltenen Konfiguration in die Behandlungsanlage einführbar ist.

Die erfindungsgemäße Beschickungsanlage ist in einer Förderanlage integrierbar, so daß der Zu- und Ablauf der Gefäße ebenfalls automatisiert ist. Die vorliegende Beschickungsanlage wird beispielsweise vor einem Gefriertrockner positioniert und kann als Reinraum ausgebildet werden. Der Arbeitshub der vorgenannten linearen Bewegungseinheiten, dies können Hydrualikkolben sein, ist entsprechend der Gefäßgröße bzw. deren Abmessungen variabel, gegebenenfalls eigenständig einstellbar.

Der durch die Arbeitsschieber gebildete Vorkommnissionierraum, ist in seiner Breite variabel festlegbar. Dessen Tiefe ist variabel gestaltbar. Dieser Vorkommnissionierraum ist durch stirnseitige Sperren begrenzt, wobei diese zumindest teilweise in die Bewegungsbahn der auf der Förderanlage befindlichen und zu behandelnden Stoffe bzw. der diese umgebenden Gefäße schwenkbar, kippbar oder ausfahrbar sind.
Unmittelbar an der Einführung der Behandlungsanlage befindet sich eine offen- und schließbare Be- und Entladeklappe. Ferner ist eine im Vorkommnissionierraum angeordnete Lagerplatte vorgesehen, die sich zusammen mit der horizontal geschwenkten Be- und Entladeklappe und im Falle eines Einsatzbeispiels von einem Gefriertrockner mit dessen Gefriertrocknerplatte dazu geeignet ist, die Beladezone zu bilden und auf denen die zu behandelnden Vials vorkommnissionierbar sind. Die Beschickungsanlage ist zumindest teilweise in die Behandlungsanlage Anlage einfahrbar. Beispielsweise kann auch ein Schieber in der Anlage verbleiben.

Bevorzugterweise werden die linearer Bewegungseinheiten durch gekapselte Hydraulikkolben gebildet, deren Wesen der erforderlichen Umgebungsvoraussetzungen unterstützend entgegen kommt. Das vorgesehene Verschlußelement schafft eine Trennung zwischen Beschickungsanlage und Behandlungsanlage. Die erfindungsgemäße Anlage ist bevorzugterweise so ausgebildet, daß Toträume oder Schmutzecken vermieden werden. Dies ist hinsichtlich der Reinigung, Sterilisation, Desinfizierung und Dekontaminierung eine wichtige Maßnahme, wie dies auch die entsprechende Materialwahl für die Anlage ist. Die von der als Pufferanlage ausgebildeten Förderanlage gespeiste Beschickungsanlage ist bevorzugterweise innerhalb eines Gehäuses gekapselt.
Bei einer besonders bevorzugten Ausführungsform der vorliegenen Erfindung ist vorgesehen, daß in der Behandlungsanlage Mittel vorgesehen sind, die die Position der Behälter, welche durch die seitlichen Schieber erstellt wurde, in der Behandlungsanlage erhalten. Ebenso sind Mittel vorgesehen, die diese Position außerhalb der Behandlungsanlage aufrechterhalten.

Unter Behandlungsanlagen werden erfindungsgemäß alle Behandlungs- und Handhabungsanlagen verstanden, die beispielsweise in pharmazeutischen Unternehmen zum Einsatz kommen. Dies können sowohl Gefriertrockner, Autoklaven oder Magaziniereinrichtungen u.a. sein. Es betrifft aber auch solche Behandlungsanlagen anderer Industriesparten, deren Betrieb die gleichen Sterilitäts- und Reinheitsqualitäten erfordern, wie solche in den pharmazeutischen Produktionsstätten.

Anhand den beigefügten Zeichnungen, die besonders bevorzugte Ausführungsbeispiele der Erfindung zeigen, wird diese nun näher beschrieben. Alle nachfolgenden Figuren beziehen sich auf ein Einsatzbeispiel der erfindungsgemäßen Beschickungsanlage vor einem Gefriertrockner, der die Behandlungsanlage darstellt. Mit der Bezeichnung Gefäß, Behältnis oder Vial wird nachfolgend auf den in diesem befindlichen, zu behandelnden Stoff verwiesen.

### Die nachfolgenden Figuren zeigen:

- Figur 1: die erfindungsgemäße Beschickungsanlage in einer Situation, bei der die Beladezone taktweise gefüllt wird.
- Figur 2: die gefüllte Beladezone;
- Figur 3: das Einfahren in den Gefriertrockner zum Beladen der Gefriertrockenplatte;
- Figur 4: einen Schnitt durch den Gefriertrockner, wobei die Übereinanderanordnung der einzelnen Platten zu erkennen ist;
- Figur 5: eine Beladesituation des Gefriertrockners;
- Figur 6: eine Entladesituation,
- Figur 7: eine Variante der vorliegenden Erfindung mit drei linearen Bewegungseinheiten bzw. Schiebern.

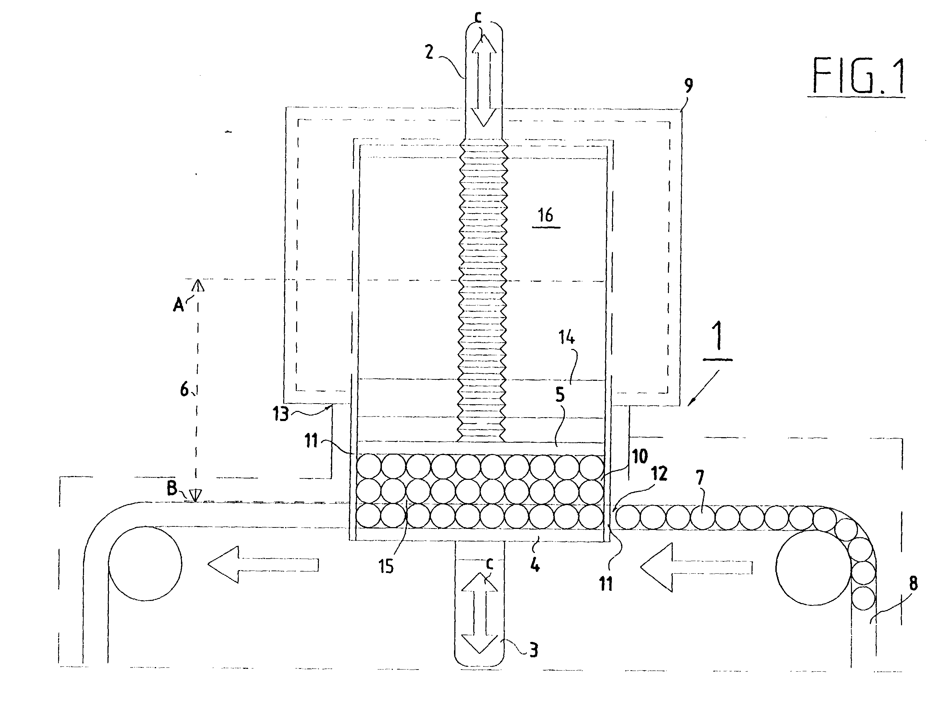

Zunächst sollen anhand von Figur 1 die einzelnen Elemente der vorliegenden Erfindung erläutert werden. Mit dem Bezugszeichen 1 ist die Beschickungsanlage als solche gekennzeichnet. Mit den Bezugszeichen 2 und 3 sind die linearen Bewegungseinheiten, hier gekapselte Hydraulikkolben, gekennzeichnet. Sie tragen an ihren Enden jeweils einen Arbeitsschieber, welche mit den Bezugszeichen 4 und 5 gekennzeichnet sind. Mit den Pfeilen A und B sind die Ausmaße der Beladezone 6 umfaßt. Mit dem Bezugszeichen 8 ist die Förderanlage und mit dem Bezugszeichen 9, das auf die Behandlungsanlage gerichtet ist, eine pharmazeutische Anlage, hier ein Gefriertrockner gekennzeichnet.

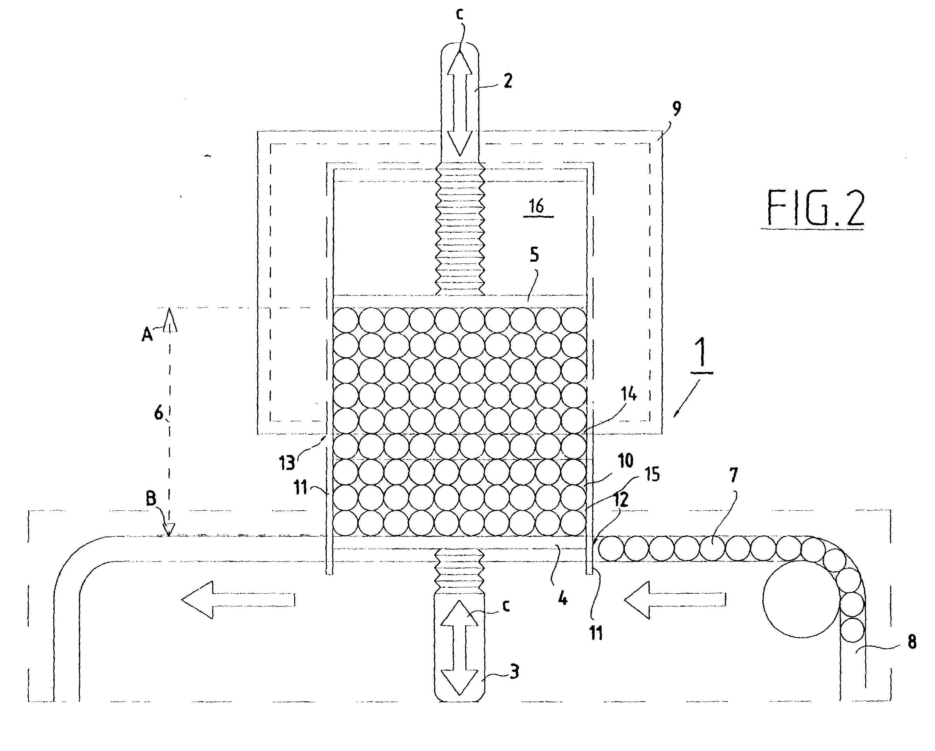

Die beiden Arbeitsschieber 4 und 5 bilden in ihrer jeweiligen Situation einen Vorkommnissionierraum 10. Beim ersten Arbeitstakt wird von der Förderanlage 8 eine Reihe der zu behandelnden, in Behältnissen 7 befindlichen Stoffen angefördert und in den Vorkommnissionierraum 10 transferiert. Der Vorkommnissionierraum 10 ist links und rechts durch stirnseitige Sperren 11 begrenzt, wobei die der Förderanlage 8 zuweisende Stirnseite zumindest außen einschwenkbar ist, um das Einfahren der zu behandelnden Stoffe in ihren Behältnissen 7 zu gewährleisten. Der hintere Arbeitsschieber 5 befindet sich dann so nahe am vorderen Arbeitsschieber 4, daß der Vorkommnissionierraum gerade so tief ist, wie die Dicke des Behältnisses 7 für den zu behandelnden Stoff, so daß eine Reihe dieser Gefäße aufgenommen werden kann. Sodann fährt der Kolben 3 und der Kolben 2 in dieser eng dimensionierten Tiefe in Pfeilrichtung C. Der hintere Schieber 5 verbleibt dann in der dort eingenommenen Situation, während der Schieber 4 in die Ausgangsposition zurückfährt. Taktgesteuert erfolgt nun wiederum die Einführung einer Gefäßreihe in den Vorkommnissionierraum, so daß nun zwei Reihen hintereinander positioniert sind.
Nun fahren erneut beide Kolben 2 und 3 in Pfeilrichtung C, so daß auch die zweite Reihe zusammen mit der ersten Reihe nach hinten verschoben wird. Der Schieber 5 vebleibt wiederum in dieser Situation, während der Schieber 4 in die Ausgangsposition zurückfährt. Erneut erfolgt nun die Einführung einer weiteren Gefäßreihe, so daß sich die Situation gemäß der Figur 1 ergibt. Dieses Arbeitspiel erfolgt solange, bis die Beladezone 6 voll ist. Diese Situation ist in Figur 2 dargestellt.

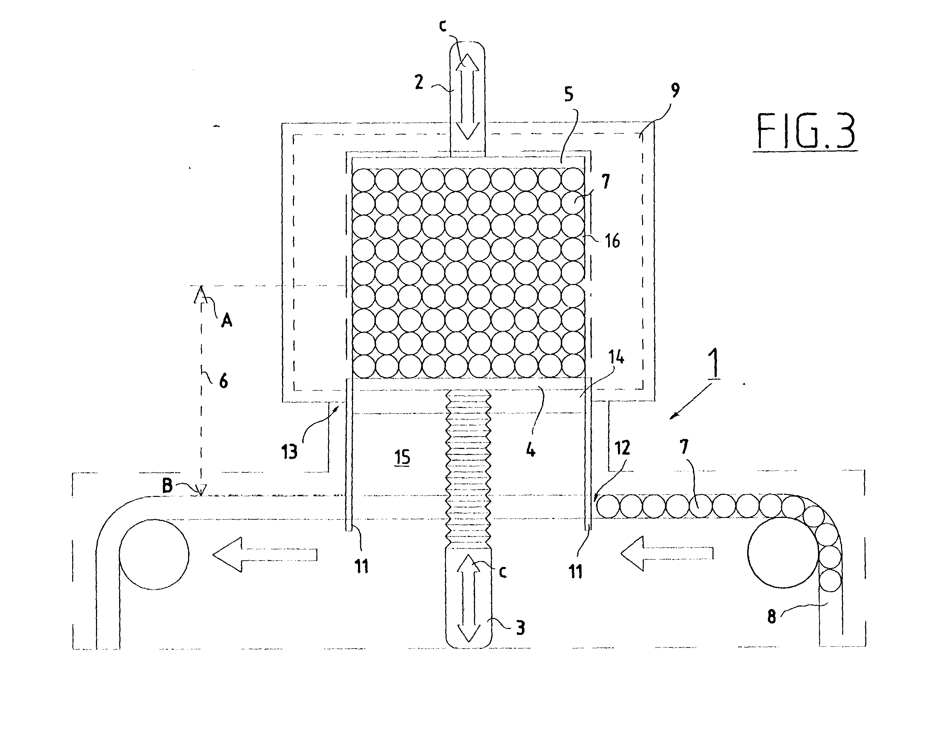

Die Figur 3 zeigt eine Situation der vorliegenden Erfindung, bei der die vollbesetzte Beladezone 6, d.h. die dort befindlichen behältnisse 7 mit den zu behandelnden Stoffen in die Behandlungsanlage 9, hier in einen Gefriertrockner eingefahren werden.

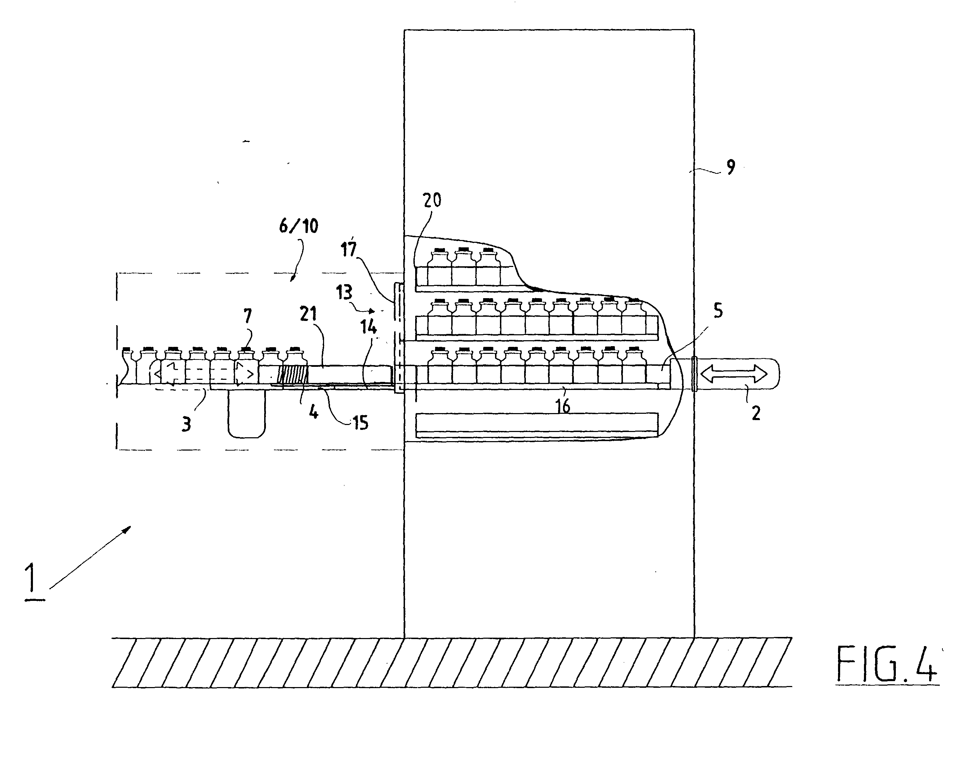

In Figur 4 ist zu erkennen, daß die in die Behandlungsanlage 9 bzw. in den Gefriertrockner eingefahrenen Behältnisse 7 mit der Platte fahrstuhlartig hochbefördert werden, um die Ebene für die Beladezone wieder freizugeben.

Die Figur 4 zeigt eine besonders bevorzugte Ausführungsform der vorliegenden Erfindung. Es ist zu erkennen, daß die Lagerplatte 15 quasi zweigeteilt ist und einen Bereich, der mit dem Bezugszeichen 14 gekennzeichnet ist, aufweist. Das Bezugszeichen 14 verweist auf eine Be- und Entladeklappe. Diese ist in die Einschubbahn der Behältnisse schwenkbar, derart, daß sie eine mit einer Platte 16 im Innern der Behandlungsanlage 9 und mit der Lagerplatte 15 im Vorkommnissionierraum 10 eine Ebene bildet. Somit ist die Beladezone 6 durch die Lagerplatt 15 des Vorkommnissionierraums 10, die Be- und Entladeklappe 14 und teilweise durch die Platte 16 der Behandlungsanlage 9 gebildet.

Die Figur 4 zeigt auch ein Verschließelement 17 zur Beschickungsanlage 1, wobei diese eine Trennung zwischen der Beschickungsanlage 1 und der Behandlungsanlage 9 bildet.

Ferner ist zur erkennen, daß bei dieser Ausführungsvariante in der Behandlungsanlage Mittel 20 vorhanden sind, die die Länge der gebildeten Behälterreihen in der Behandlungsanlage 9 einhält. Solche Mittel 21 sind auch außerhalb der Behandlungsanlage vorgesehen.

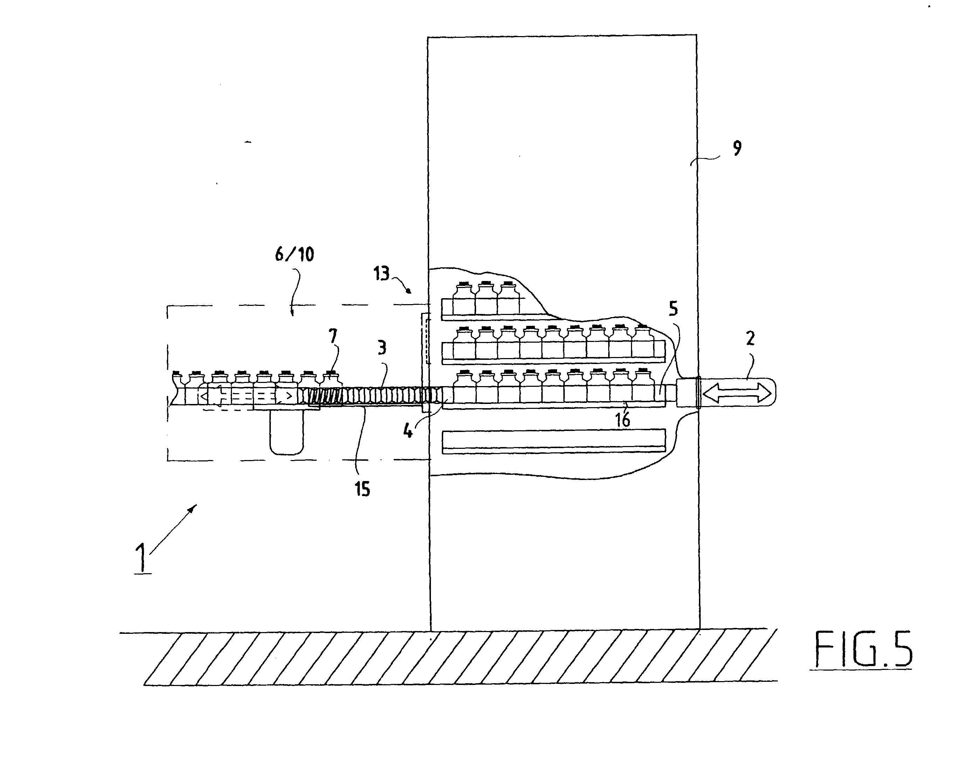

Die Figur 5 zeigt wieder um eine Situation, bei der die lineare Bewegungseinheit 2, hier der Hydraulikkolben, den Arbeitsschieber 4 mit den davor angeordneten, in Behältnissen 7 befindlichen Stoffen in die Behandlungsanlage 9 bzw. in den Gefriertrockner einfährt.

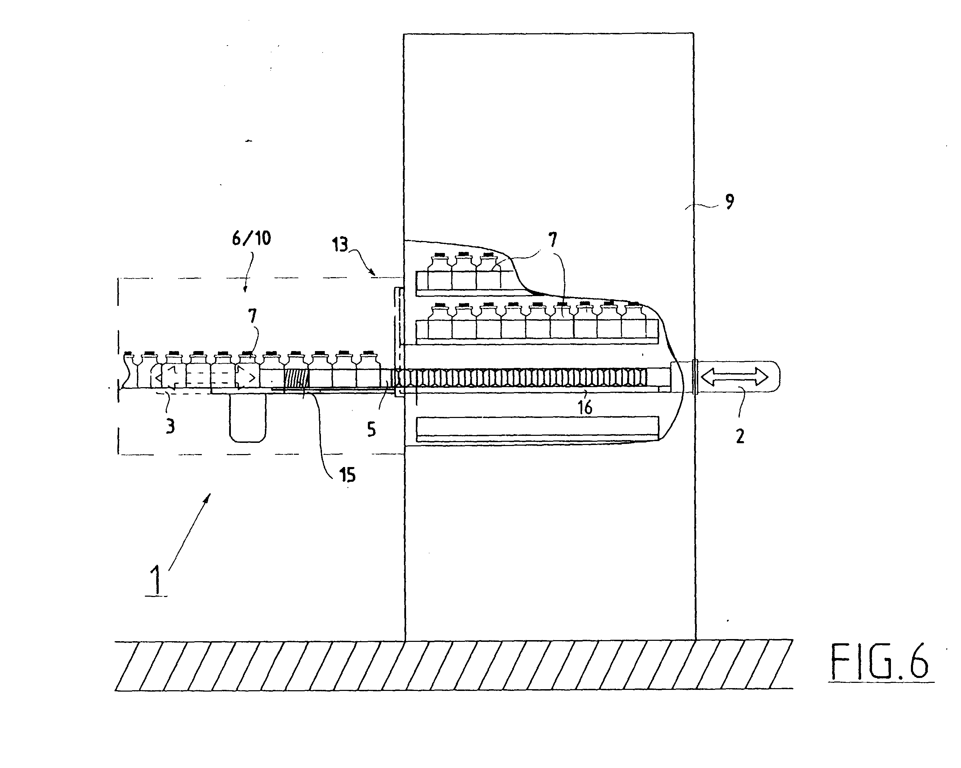

Die Figur 6 zeigt die Umkehrsituation, bei der die in der Behandlungsanlage 9 bzw. im Gefriertrockner behandelten in Behältnissen 7 befindlichen Stoffen entladen werden.

Es ist dabei anzumerken, daß die Lagerplatte 15 im Bereich des Vorkommnissionierraumes 10 zusammen mit der Be- und Entladeklappe 14 der Behandlungsanlage 9 bzw. des Gefriertrockners sowie die in der Anlage bzw. im Gefriertrockner befindliche Platte 16, hier eine Gefriertrocknerplatte (letztere nur teilweise) die Beladezone 6 bilden. Dabei ist die Be- und Entladeklappe 14 horizontal geschwenkt, so daß diese einen Übergang zwischen Lagerplatte 15 und der dargestellten Platte bzw. Gefriertrocknerplatte 16 bildet.

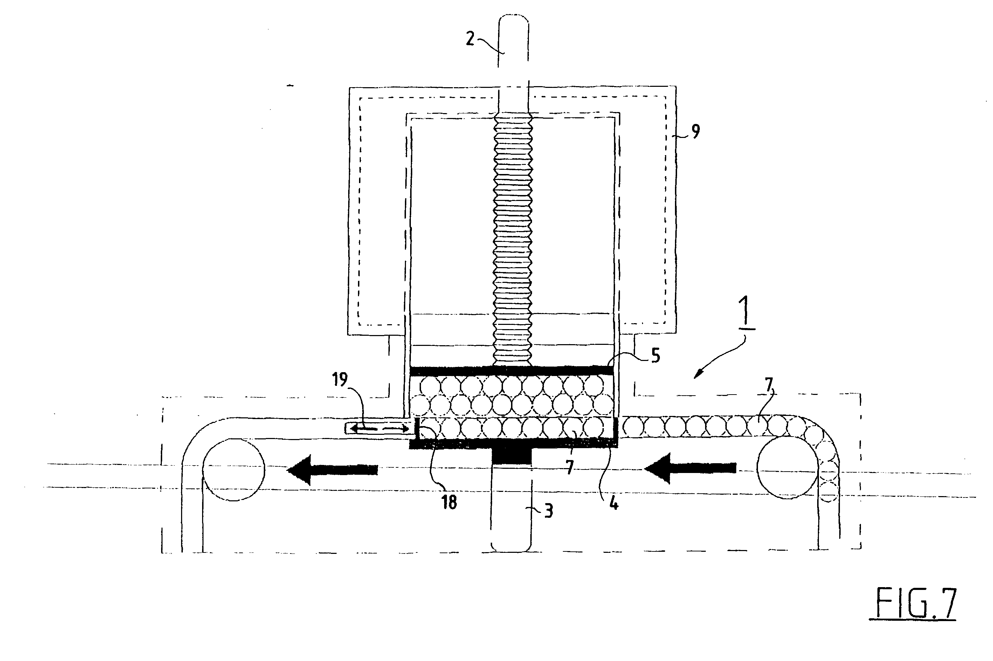

Die Figur 7 zeigt eine Variante der vorliegenden Erfindung, bei der drei lineare Bewegungseinheiten 2, 3, 19 eingesetzt werde, die jeweils einen Arbeitsschieber 4, 5 und 18 aktivieren. Es ist hierbei darauf zu verweisen, daß die Behältnisse 7 zwar reihenweise, jedoch jede Reihe in einem Versatz zur vorhergehenden Reihe im Umfang einer halben Behältnisbreite bzw. des halben Durchmessers des Behältnisses vorkommissioniert werden. Dadurch werden gegenüber den Ausführungsbeispielen nach den Figuren 1 - 6 günstigere Beladeräume geschaffen, d.h. es können mehr Vials in die Behandlungsanlage eingeführt werden.

Mit der vorliegenden Erfindung wird eine Beschickungsanlage geschaffen, mittels der von der manuellen Beschickung Abstand genommen werden kann, da ein sehr hoher, annähernd vollständiger Automatisierungsgrad erreicht ist. Im Sinne der Erfindung liegt scwohl eine geordnete oder auch ungeordnete Einführung den Behältnisse in die Behandlungsanlage, d.h. es besteht die Möglichkeit eine reihenweise oder eine hiervon abweichende Ordnung oder Unordnung im Ablauf vorzusehen, wenn dies verfahrenstechnisch sinnvoll ist. Es besteht auch die Möglichkeit, vorgeordnete Gebinde den jeweiligen Schiebern zuzuführen. Bevorzugterweise ist die Beschickungsanlage in einem Gehäuse gekapselt, wobei die für das Gehäuse vorgesehenen Mittel derart ausgelegt sind, damit eine Trennung von Arbeitsbereich und Umgebung sichergestellt ist. Die hier zu erwähnenden Trennungsaspekte erstrecken sich über physikalische oder chemische Verhältnisse, wobei sowohl der Luftdruck, die Lufttemperatur, die Feuchtigkeit, atmosphärische Zusammenhänge sowie die Partikelfreiheit zu berücksichtigen sind. Der Gefäßanoder Abtransport kann in verschiedenen Richtungen erfolgen.

### Bezugszeichenliste

- 1: Beschickungsanlage
- 2: lineare Bewegungseinheit/Hydraulikkolben
- 3: lineare Bewegungseinheit/Hydraulikkolben
- 4: Arbeitsschieber
- 5: Arbeitsschieber
- 6: Beladezone
- 7: Behältnis für den zu behandelnden Stoff (Gefäß, Vial)
- 8: Förderanlage
- 9: Behandlungsanlage (pharmazeutische Anlage/Gefriertrockner)
- 10: Vorkommnissionierraum
- 11: stirnseitige Sperren
- 12: Bewegungsbahn von 7
- 13: Einführung in die pharmazeutische Anlage/Gefriertrocknereinführung
- 14: Be-/Entladeklappe
- 15: Lagerplatte
- 16: Platte/Gefriertrocknerplatte
- 17: Verschlußelement an 9
- 18: Schieber
- 19: Bewegungseinheit
- 20: stirnseitiges Fixiermittel für 7
- 21: stirnseitiges Fixiermittel für 7

## Patentansprüche

1. Beschickungsanlage für Behandlungsanlagen von in Gefäßen oder Behältnissen befindlichen Stoffen,
wobei
mindestens zwei durch lineare Bewegungseinheiten (2, 3, ...), deren Arbeitshub entsprechend der Größe der Gefäße oder Behältnisse (7) variabel eigenständig einstellbar ist, aktivierbare Arbeitsschieber (4, 5, ...) vorgesehen sind, die eine Beladezone (6) begrenzen, in die der, in dem Gefäß oder Behältnis (7) befindliche und zu behandelnde Stoff einführbar und durch Kontaktierung der mindestens zwei Arbeitsschieber (4, 5 ...) senkrecht kippsicher ausrichtbar ist, wobei die Arbeitsschieber (4, 5, ...) einen Vorkommisionierraum (10) bilden, der mit den zu behandelnden in den Gefäßen oder Behältnissen (7) befindlichen Stoffen füllbar ist und nach Erreichen eines vorgegebenen Füllvolumens unter Beibehaltung einer durch die Arbeitsschieber (4, 5, ...) erhaltenen Konfiguration in die Behandlungsanlage einführbar ist.

2. Beschickungsanlage nach Anspruch 1,
dadurch gekennzeichnet,
daß die Beschickungsanlage (1) in einer Förderanlage (8) integriert ist.

3. Beschickungsanlage nach Anspruch 1 und 2,
dadurch gekennzeichnet,
daß die Beschickungsanlage (1) vor einer Behandlungsanlage (9) in Form eines Gefriertrockners positionierbar ist.

4. Beschickungsanlage nach Anspruch 1 bis 3,
dadurch gekennzeichnet,
daß die Beschickungsanlage (1) als Reinraum ausgebildet ist.

5. Beschickungsanlage nach Anspruch 1 bis 4,
dadurch gekennzeichnet,
daß im Vorkommnissionierraum (10) der kontinuierliche Abtransport der in Behältnissen (7) befindlichen Stoffen in einer Diskontinuierlichen Beladevorgang umgewandelt wird.

6. Beschickungsanlage nach Anspruch 5,
dadurch gekennzeichnet,
daß die Breite des Vorkommnissionierraumes (10) festlegbar und die Tiefe variabel ist.

7. Beschickungsanlage nach Anspruch 1 bis 6,
dadurch gekennzeichnet,
daß das Gefäß oder Behältnis (7) für den zu behandelnden Stoff in Form von Flaschen, sogenannten Vials vorliegt.

8. Beschickungsanlage nach Anspruch 1 bis 7,
dadurch gekennzeichnet,
daß der Vorkommnissionierraum (10) durch stirnseitige Sperren (11) begrenzt ist.

9. Beschickungsanlage nach Anspruch 1 bis 8,
dadurch gekennzeichnet,
daß die Sperren (11) zumindest teilweise in die Bewegungsbahn (12) der auf der Förderanlage (8) befindlichen, zu behandelnden in Gefäßen oder Behältnissen (7) befindlichen Stoffen schwenkbar, kippbar oder ausfahrbar sind.

10. Beschickungsanlage nach Anspruch 1 bis 9,
dadurch gekennzeichnet,
daß an der Einführung (13) der Behandlungsanlage (9) eine schwenk-, klapp-, oder entfernbare Entladeklappe (14) angeordnet ist.

11. Beschickungsanlage nach Anspruch 10,
dadurch gekennzeichnet,
daß die Be- und Entladeklappe (14) in der Einschubbahn der, in Gefäßen oder Behältnissen (7) befindlichen Stoffen schwenkbar ist, derart, daß sie eine mit einer Platte (16) im Innern der Behandlungsanlage (9) und einer Lagerplatte (15) im Vorkommnissionierraum (10) eine Ebene bildet.

12. Beschickungsanlage nach Anspruch 1 bis 11,
dadurch gekennzeichnet,
daß die Beladezone (6) durch die Lagerplatte (15) des Vorkommnissionierraumes (10), die Be- und Entladeklappe (14) und teilweise durch die Platte (16) der behandlungsanlage (9) gebildet ist.

13. Beschickungsanlage nach Anspruch 1 bis 12,
dadurch gekennzeichnet,
daß die Beschickungsanlage (1) zumindest teilweise in die Behandlungsanlage (9) einfahrbar ist.

14. Beschickungsanlage nach Anspruch 1 - 13,
dadurch gekennzeichnet,
daß die linearen Bewegungseinheiten (2,3...) als gekapselte Hydraulikkolben ausgebildet sind.

15. Beschickungsanlage nach Anspruch 1 - 14,
dadurch gekennzeichnet,
daß die Anlage durch ein Verschließelement (17) zur Beschickungsanlage (1) hin schließbar ist, wobei eine Trennung zwischen Beschickungsanläge (1) und der Behandlungsanlage (9) gebildet ist.

16. Beschickungsanlage nach Anspruch 15,
dadurch gekennzeichnet,
daß die Be- oder Entladeklappe (14) zwischen Beschickungsanlage (1) und Behandlungsanlage (9) angeordnet ist.

17. Beschickungsanlage nach Anspruch 1 - 16,
dadurch gekennzeichnet,
daß die Beschickungsanlage (1) durch die Vermeidung von Toträumen und einer entsprechenden Materialwahl sowohl desinfizierbar, sterilisierbar und
dekontaminierbar ist.

18. Beschickungsanlage nach Anspruch 1 - 17,
dadurch gekennzeichnet,
daß die Förderanlage (8) als Pufferanlage ausgebildet ist.

19. Beschickungsanlage nach Anspruch 1 - 18,
dadurch gekennzeichnet,
daß die Beschickungsanlage (1) in einem Gehäuse gekapselt ist.

20. Beschickungsanlage nach Anspruch 1 - 19,
dadurch gekennzeichnet,
daß in der Behandlungsanlage (9) Mittel (20) vorgesehen sind die, die Positionen der Behälter (7), welche durch die seitlichen Schieber erstellt sind, in der Behandlungsanlage (9) erhalten.

21. Beschickungsanlage nach Anspruch 1 - 20,
dadurch gekennzeichnet,
daß stirnseitige Mittel (21) vorgesehen sind, die die Position der in Reihen befindlichen Behälter (7), außerhalb der Behandlungsanlage (9) erhalten.

## Claims

1. Charging installation for treatment plants for materials in containers, where at least two slide-gate valves (4, 5 ....) are provided, which are activated by linear movement units (2, 3, ....), the working stroke of which can be independently adjusted according to the size of the containers (7), said slide-gate valves delimiting a charging zone (6), into which the material to be treated and which is in the container (7) is introduced and is lined up vertically so that it cannot tip over by making contact with at least two slide-gate valves (4, 5, ...), where the slide-gate valves (4, 5, ...) form a pre-commissioning compartment (10), which is filled with the materials to undergo treatment in the containers (7) and once a pre-set filling volume has been attained, whilst retaining a configuration obtained by the slide-gate valves (4, 5, ...), can be introduced into the reatment plant.

2. Charging installation according to claim 1,
characterised in that
the charging installation (1) forms part of a conveyor system (8).

3. Charging installation according to claims 1 and 2,
characterised in that
the charging installation (1) can be positioned in front of a treatment plant (9) in the form of a freeze drier.

4. Charging installation according to claims 1 to 3,
characterised in that
the charging installation (1) is developed as a clean room.

5. Charging installation according to claims 1 to 4,
characterised in that
in the pre-commissioning compartment (10) the continuous removal of the materials in the containers (7) is converted into a discontinuous charging process.

6. Charging installation according to claim 5,
characterised in that
the width of the pre-commissioning compartment (10) can be fixed and the depth can be varied.

7. Charging installation according to claims 1 to 6,
characterised in that
the container (7) for the material to be treated is present in the form of bottles, or so-called vials.

8. Charging installation according to claims 1 to 7,
characterised in that
the pre-commissioning compartment (10) is delimited by gates (11) at the front.

9. Charging installation according to claims 1 to 8,
characterised in that
the gates (11) can, at least in part, be swivelled, tilted or extended into the movement path (12) of the materials to be treated and which are in containers (7) on the conveyor system (8).

10. Charging installation according to claims 1 to 9,
characterised in that
a swivelling, tilting or removable discharge flap (14) is positioned at the inlet (13) to the treatment plant (9).

11. Charging installation according to claim 10,
characterised in that
the charge and discharge flap (14) can be swivelled in the feed path of the materials in containers (7), in such a way that it forms one plane with a plate (16) inside the treatment plant (9) and a bearing plate (15) in the pre-commissioning compartment (10).

12. Charging installation according to claims 1 to 11,
characterised in that
the charging zone (6) is formed by the bearing plate (15) of the pre-commissioning compartment (10), the charge and discharge flap (14) and, in part, by the plate (16) of the treatment plant (9).

13. Charging installation according to claims 1 to 12,
characterised in that
the charging installation (1) can, at least in part, be inserted into the treatment plant (9).

14. Charging installation according to claims 1 to 13,
characterised in that
the linear movement units (2, 3, ...) are developed as enclosed hydraulic pistons.

15. Charging installation according to claims 1 to 14,
characterised in that
the system can be closed towards the charging installation (1) by means of a closing element (17), thus forming a separation between charging installation (1) and treatment plant (9).

16. Charging installation according to claim 15,
characterised in that
the charge or discharge flap (14) is positioned between charging installation (1) and treatment plant (9).

17. Charging installation according to claims 1 to 16,
characterised in that,
by avoiding dead spaces and by choosing suitable materials, the charging installation (1) is capable of being disinfected, sterilised and decontaminated.

18. Charging installation according to claims 1 to 17,
characterised in that
the conveyor system (8) is developed as a buffer system.

19. Charging installation according to claims 1 to 18,
characterised in that
the charging installation (1) is enclosed in a casing.

20. Charging installation according to claims 1 to 19,
characterised in that
in the treatment plant (9) means (20) are provided, which maintain the positions of the containers (7) in the treatment plant (9), which are produced by the side slide-gate valves.

21. Charging installation according to claims 1 to 20,
characterised in that
means (21) are provided at the front, which maintain the position of the rows of containers (7) outside the treatment plant (9).

## Revendications

1. Unité de chargement destinée aux installations de traitement de produits se trouvant dans des récipients ou contenants, où sont prévus au moins deux coulisseaux (4, 5, ...) que l'on peut activer au moyen d'unités de déplacement (2, 3, ... ) linéaires et dont la course de travail est réglable de manière autonome en fonction de la taille des récipients ou contenants (7), lesdits coulisseaux délimitant une zone de chargement (6) où on peut introduire le produit contenu dans le récipient ou contenant (7) et qui doit être traité, ledit produit étant stable verticalement et orientable grâce à la mise en contact des coulisseaux (4, 5 ... ) qui sont au moins au nombre de deux, où ces coulisseaux (4, 5, ... ) constituent un espace de première préparation des commandes (10) pouvant être rempli par les produits à traiter situés dans les récipients ou contenants (7) et, après obtention d'un volume de remplissage pré-déterminé, pouvant être introduit dans l'unité de traitement en conservant la configuration donnée par les coulisseaux (4, 5 ...).

2. Unité de chargement selon la revendication 1,
caractérisée en ce que
l'unité de chargement (1) est intégrée dans une installation de transport (8).

3. Unité de chargement selon la revendication 1 et 2,
caractérisée en ce que
l'unit de chargement (1) peut être placée en amont d'une installation de traitement (9) sous la forme d'une chambre de séchage par congélation.

4. Unité de chargement selon la revendication 1 à 3,
caractérisée en ce que
l'unité de chargement (1) constitue une salle blanche.

5. Unité de chargement selon la revendication 1 à 4,
caractérisée en ce que
dans l'espace de première préparation des commandes (10), l'enlèvement continu des produits situés dans des contenants (7) est transformé en un processus de chargement discontinu.

6. Unité de chargement selon la revendication 5,
caractérisée en ce que la largeur de l'espace de première préparation des commandes (10) peut être déterminée et que la profondeur en est variable.

7. Unité de chargement selon la revendication 1 à 6,
caractérisée en ce que
la récipient ou contenant (7) destiné au produit à traiter se présente sous forme de flacons appelés fioles.

8. Unité de chargement selon la revendication 1 à 7,
caractérisée en ce que
l'espace de première préparation des commandes (10) est délimité par des dispositifs d'arrêt frontaux (11).

9. Unité de chargement selon la revendication 1 à 8,
caractérisée en ce que
les dispositifs d'arrêt (11) peuvent au moins en partie effectuer des mouvements de rotation, basculement ou déplacement par rapport au chemin suivi (12) par les produits situés dans des récipients ou contenants (7), placés dans l'installation de transport (8) et destinés à être traités.

10. Unité de chargement selon la revendication 1 à 9,
caractérisée en ce qu'un
volet de déchargement (14) pivotant, basculant et amovible est placé à l'entrée (13) de l'installation de traitement (9).

11. Unité de chargement selon la revendication 10,
caractérisée en ce que
le volet de chargement et déchargement (14) est pivotant par rapport au chemin suivi par les produits situés dans des récipients ou contenants (7) à leur entrée, de telle sorte qu'ils forment un seul et même niveau avec une plaque (16) se trouvant à l'intérieur de l'installation de traitement (9) et une plaque de stockage (15) placée dans l'espace de première préparation des commandes (10).

12. Unité de chargement selon la revendication 1 à 11,
caractérisée en ce que
la zone de chargement (6) est formée par la plaque de chargement (15) de l'espace de première préparation des commandes (10), le volet de chargement et déchargement (14) et, en partie, par la plaque (16) de l'installation de traitement (9).

13. Unité de chargement selon la revendication 1 à 12,
caractérisée en ce que
l'unité de chargement (1) peut entrer au moins en partie dans l'installation de traitement (9).

14. Unité de chargement selon la revendication 1 - 13,
caractérisée en ce que
les unités de déplacement linéaire (2, 3, ... ) sont réalisées sous forme de pistons hydrauliques entièrement clos.

15. Unité de chargement selon la revendication 1 - 14,
caractérisée en ce que
l'installation peut être fermée par un élément de clôture (17) se trouvant du côté de l'installation de chargement (1), une séparation étant constituée entre l'installation de chargement (1) et l'installation de traitement (9).

16. Unité de chargement selon la revendication 15,
caractérisée en ce que
le volet de chargement ou déchargement (14) se trouve entre l'unité de chargement (1) et l'installation de traitement (9).

17. Unité de chargement selon la revendication 1 - 16,
caractérisée en ce que
l'unité de chargement (1) peut être désinfectée, stérilisée et décontaminée grâce à l'absence d'espaces morts et au choix de matériaux adaptés.

18. Unité de chargement selon la revendication 1 - 17,
caractérisée en ce que
l'installation de transport (8) est conçue comme une zone tampon.

19. Unité de chargement selon la revendication 1 - 18,
caractérisée en ce que
l'unité de chargement (1) est enclose dans un carter.

20. Unité de chargement selon la revendication 1 - 19,
caractérisée en ce que
des dispositifs (20) sont prévus dans l'unité de chargement (1) qui conservent la position des contenants (7) obtenue au moyen des coulisseaux latéraux à l'intérieur de l'installation de traitement.

21. Unité de chargement selon la revendication 1 - 20,
caractérisée en ce que
des dispositifs (21) sont prévus à l'avant qui maintiennent dans leur position les contenants (7) placés en rangées et ce, à l'extérieur de l'installation de traitement (9).
